# EUROPEAN PATENT SPECIFICATION

(11) **EP 4 020 197 B1**
(45) Date of publication and mention of the grant of the patent: **11.10.2023**
(21) Application number: 21209950.1
(22) Date of filing: 23.11.2021
(51) Int. Cl.: G06F 9/455, G06F 8/61

(54) **METHODS AND APPARATUS FOR LOADING OF A CONTAINER IMAGE**
VERFAHREN UND VORRICHTUNG ZUM LADEN EINES CONTAINER IMAGES
PROCÉDÉS ET APPAREIL DE CHARGEMENT D'UNE IMAGE DE CONTENEUR

(30) Priority: 23.12.2020 US 202017133015
(43) Date of publication of application: 29.06.2022
(73) Proprietor: INTEL Corporation, Santa Clara, CA 95054 (US)
(72) Inventor: ILLIKKAL, Rameshkumar, Folsom, 95630 (US); GOH, Teck Joo, Saratoga, 95070 (US); SHU, Wenhui, Shanghai, 200240 (CN); KURIATA, Andrzej, 80292 Gdansk (PL); CUI, Long, Minhang, Shanghai Shi, 200241 (CN); CHEN, Jinshi, Shanghai, 201100 (CN); DODAN, Mihai-Daniel, 077190 Bucharest (RO)
(74) Representative: 2SPL Patentanwälte PartG mbB

(56) References cited:
- US-B1- 10 768 973
- TYLER HARTER ET AL: "Slacker: Fast Distribution with Lazy Docker Containers", USENIX, USENIX, THE ADVANCED COMPUTING SYSTEMS ASSOCIATION , 22 February 2016 (2016-02-22), pages 188-202, XP061024899, Retrieved from the Internet: URL:https://www.usenix.org/sites/default/f iles/fast16_full_proceedings_interior.pdf [retrieved on 2016-02-22]
- Tokunaga Kohei: "Startup Containers in Lightning Speed with Lazy Image Distribution on Containerd", , 22 April 2020 (2020-04-22), pages 1-10, XP055914232, Retrieved from the Internet: URL:https://medium.com/nttlabs/startup-con tainers-in-lightning-speed-with-lazy-image -distribution-on-containerd-243d94522361 [retrieved on 2022-04-21]

## Description

### FIELD OF THE DISCLOSURE

This disclosure relates generally to container-based computing, and, more particularly, to enable efficient loading of a container image.

### BACKGROUND

Containers are virtual structures used for execution of an isolated instance of an application within a host virtualization environment. Containers are used to facilitate operating system virtualization, thereby abstracting (e.g., isolating) an application from the operating system. As a result, an application executing in a first container is isolated from another application (perhaps even a copy of the same application) that is executed outside of the container (e.g., at the host operating system or in another container).

TYLER HARTER ET AL: "Slacker: Fast Distribution with Lazy Docker Containers", USENIX, USENIX, THE ADVANCED COMPUTING SYSTEMS ASSOCIATION, 22 February 2016 (2016-02-22), pages 188-202, discusses a container benchmark to evaluate the startup times of different containerized applications. Further, it discusses a Docker storage driver that is based on centralized storage shared between all Docker workers and registers.

### BRIEF DESCRIPTION OF THE DRAWINGS

FIG. 1A is a block diagram illustrating a first example container image that does not include a landmark and a second example container image including a landmark.
FIG. 1B is a block diagram illustrating an example container.
FIG. 2 is a block diagram of an example compute system implemented in accordance with teachings of this disclosure to enable lazy loading of container images.
FIG. 3 is an example priority level to memory tier mapping table that may be used to identify locations for storage of layers of a container.
FIG. 4 is a flowchart representative of example machine readable instructions that may be executed to implement the example computing system of FIG. 2 to compress and store a container.
FIG. 5 is a flowchart representative of example machine readable instructions that may be executed to implement the example computing system of FIG. 2 to load a container for execution.
FIG. 6 is a block diagram of an example processor platform structured to execute the instructions of FIGS. 4 and/or 5 to implement the example computing system of FIG. 2.
FIG. 7 is a block diagram of an example software distribution platform to distribute software (e.g., software corresponding to the example computer readable instructions of FIGS. 4 and/or 5) to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers).
FIG. 8 is a diagram illustrating example performance improvements as a result of using example approaches disclosed herein.

The figures are not to scale. In general, the same reference numbers will be used throughout the drawing(s) and accompanying written description to refer to the same or like parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

### DETAILED DESCRIPTION

Operating System (OS) level virtualization enables execution of multiple isolated user space instances on a computing system. Such instances are commonly referred to as containers, but may additionally or alternatively be referred to as Zones, virtual private servers, partitions, virtual environments (VEs), virtual kernels, jails, etc. Such containers appear to function as a complete computer system from the perspective of the application(s) executed inside of the container. However, while an application executed on a traditional computer operating system can access resources of that computer (e.g., connected devices, file systems, network shares, etc.), when the application is executed within a container, the application can only access those resources associated with the container. In other words, the application does not have access to resources outside of the container (e.g., resources in another container, resources of the host operating system, etc.) other than those resources outside of the container that the application is specifically allowed to access.

To that end, containers are useful from a resource management standpoint (e.g., resources used by containerized components are isolated for use only by those components that are part of the same container) and/or from a security standpoint (e.g., access to containerized files or components can be restricted). Likewise, containers are useful for achieving lightweight, reproducible application deployments. In this manner, containers are frequently used in cloud computing environments to enable resources to be allocated, removed, and/or re-allocated based on demand.

Prior to execution of a container within a host environment, the container is stored as a container image that specifies components of the container including, for example, libraries, binaries, and/or other files for needed for execution of the container.

A container is different from a container image, even from a storage perspective, in the sense that the container image represents the base from which a container starts. A container will add on top the image a "thin" layer which is both readable and writable. Any changes that a container will attempt to make to the content of a file in the image will trigger a copy-on-write mechanism, which will instead create a copy in the thin layer of the file from the image, which will then be used by the container for both reading and writing purposes. In this manner, a container image or, more generally, a container, is different from a virtual machine image (or other data structure), where changes to a virtual machine image made by an application executed within the virtual machine will cause writes to the image itself.

A container image can include one or more container layers, which can be considered the fundamental units of container storage. Each layer adds a different set of files and folders to the overall image. The containers layers of an image are considered read-only and will often be reused as building blocks for one or more containers which can share them (e.g., 2 containers with the same operating system, will share the layers that represent that OS). When a container is to be created, a Container Runtime Engine (e.g., an entity creating and managing the container during its lifespan) will have a handler which will be responsible to ensure that all necessary layers to create the container exists on disk, pull them from a remote storage over the network if unavailable and create a last, thin layer (which is container specific), to which the container can both read and write. Such an approach is called Copy-on-Write, and prevents the container from writing to files in the read-only layers. Therefore, when a determination is made to execute the container in the host environment, the Container Runtime Engine pulls all missing layers from a container registry (e.g., via a network), creates a small copy-on-write layer and mounts all the layers in the new container (the mount operation does not implicate any read, write or execute operation), and loads or runs whatever binary or program the container was designated to run from final image. These steps of creating the containers storage are usually referred to as: pull phase, create phase (including mounting), and run phase. These steps are the main cause for any overhead when launching a container and should be mitigated.

In Function-as-a-Service (FAAS) and Container-as-a-Service (CAAS) environments, container start-up time has major impact on the Quality-of-Service (QoS), as seen from an end user perspective. A cold start time, that is, an amount of time it takes from the command to launch a container, go through the 3 steps of preparation (pull, create, run) until it completes execution for the first time on a machine. Depending on how many layers are missing and how long it takes to create and mount all the container layer, the impact to function performance can be significant. This cold-start time can be also influenced for the need during run time to process large or numerous files, high latency for file operations, etc. for the first time. High latencies and volatile runtime cannot be tolerated for some use-cases (e.g., real-time processing, streaming, sub-second functions). Moreover, for workloads that are deemed to be high priority, start-up time (and variance of that time) is ideally reduced and/or minimized. Example approaches disclosed herein enable a reduction in container start-up times, particularly in FaaS and CaaS environments. Also, most hosts of FaaS / CaaS services wish for predictable runtimes with low variation, as long cold-starts can either result in higher bills for the customer (if the time is billed) or losses for the provider (if the cold-start is not billed). Moreover, examples disclosed herein offer differentiated services based on a priority and/or importance of a particular container.

Existing approaches attempt to minimize cold start time by keeping the container warm. That is, the image for the container is kept in DRAM, by using a RAM-disk. However, continuously storing container images in DRAM is a costly solution, especially if those containers are not actively used.

Some other existing approaches attempt to overcome delays associated with downloading a full image on disk in order to start a container and, instead, offer lazy loading of the image. In such prior approaches, the container can be started once critical portions of the image are downloaded into on the storage, while other layers are downloaded after the container start, and are pulled from the registry during execution.

As explained herein, use of a tiered storage topology (e.g., based on Intel^{®} 3D XPoint) can further improve cold start times, increase a density of functions deployed in the system, and offer differentiated services (e.g., improved loading times based on workload priority). In this manner, hierarchical storage topologies (e.g., based on Intel^{®} 3D XPoint) are used to offer differentiated services and reduced container cold-start time in FaaS / CaaS deployments. In some examples, Intel^{®} Resource Director Technology (Intel^{®} RDT) is used to further extend service differentiation and improve performance predictability (e.g., container run time). In this manner, example approaches disclosed herein extend the concept of image lazy loading in the context of a tiered storage system, with the added benefit of using various tiers of the tiered storage system to provide varying levels of performance and/or predictability.

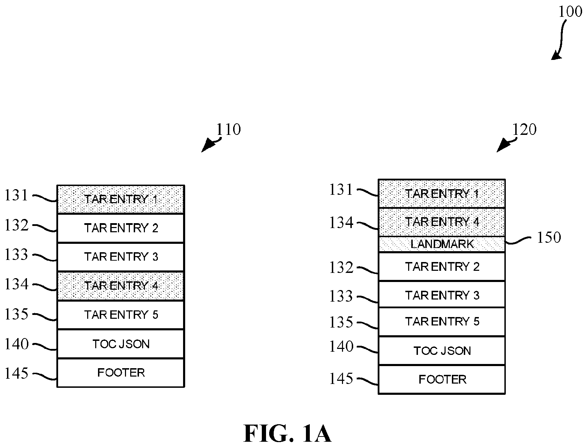

FIG. 1A is a block diagram illustrating a first example container image 110 that does not include a landmark and a second example container image 120 that does include a landmark. The first example container image 110 of FIG. 1A is compressed using a first compression format that does not utilize a landmark. In the illustrated example of FIG. 1A, the first compression format represents the stargz compression format. The first example container image 110 of FIG. 1A includes a first layer 131, a second layer 132, a third layer 133, a fourth layer 134, a fifth layer 135, a table of contents 140, and a footer 145. Each of the first layer 131, the second layer 132, the third layer 133, the fourth layer 134, and the fifth layer 135 correspond to respective sections of the image 110. As shown in the illustrated example of FIG. 1A, the respective layers 131, 132, 133, 134, 135 are TAR archives. However, any other past, present, and/or future archiving format may additionally or alternatively be used. In the illustrated example of FIG. 1A, the first layer 131 and the fourth layer 134 represent layers that are necessary for immediate execution of the container. In this manner, the second layer 132, the third layer 133, and the fifth layer 135 are not needed for immediate execution of the image.

In the illustrated example of FIG. 1A, the table of contents 140 includes metadata and offset information for the image. In some examples, the table of contents 140 is formatted using JavaScript Object Notation (JSON). However, any other data format may additionally or alternatively be used. The example footer 145 represents an offset from the table of contents 140.

The second example image 120 of FIG. 1A includes the first layer 131, the second layer 132, the third layer 133, the fourth layer 134, the fifth layer 135, the table of contents 140, and the footer 145. The second example container image 120 of FIG. 1A is compressed using a second compression format that includes a landmark 150. In contrast to the first example image 110, the first layer 131 and the fourth layer 134 are arranged prior to the landmark 150 in the second image 120. The second layer 132, the third layer 133, and the fifth layer 135 are arranged after the landmark 150.

By using the landmark 150, layers of the image prior to the landmark 150 can be pre-fetched for loading into memory. In some examples, the pre-fetching of the layers prior to the landmark 150 is performed using a single operation. In the illustrated example of FIG. 1A, layers of the image that are needed for execution of the container (e.g., the first layer 131 and the fourth layer 134) are arranged prior to the landmark, such layers can be pulled into the storage medium, as opposed to requiring the entirety of the image to be available on disk. Such pre-fetching and/or loading of particular layers of an image (e.g., layers that are required for immediate execution of the image) is referred to as lazy loading and/or lazy image pulling.

In the illustrated example of FIG. 1A, the second compression format is implemented using an estargz compression format. However, any other compression format that uses a landmark and/or otherwise enables prefetching of a range of layers of the image may additionally or alternatively be used.

While in the illustrated example of FIG. 1A, the example images are shown each with five layers, in practice, an image for a container may include any number of layers. Moreover, while the example images of FIG. 1A show two layers as being required for immediate execution of the image, in practice, any number of such layers may be identified as required for immediate execution of the image.

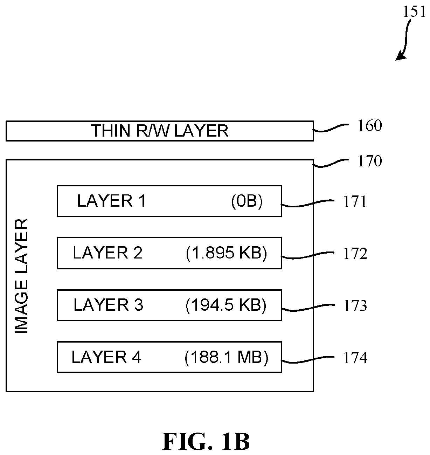

FIG. 1B is a block diagram illustrating an example container 151. As noted above, a container is different from a container image, in the sense that the container image represents the base from which a container starts. In the illustrated example of FIG. 1B, the example container 150 includes a "thin" layer 160, which is both readable and writable. The container 150 also includes an image layer 170, which includes a first layer 171, a second layer 172, a third payer 173, and a fourth layer 174. Any changes that a container will attempt to make to the content of a file in the image layer 170 will trigger a copy-on-write mechanism, which will instead create a copy in the thin layer 160 of the file from the image 170, which will then be used by the container for both reading and writing purposes.

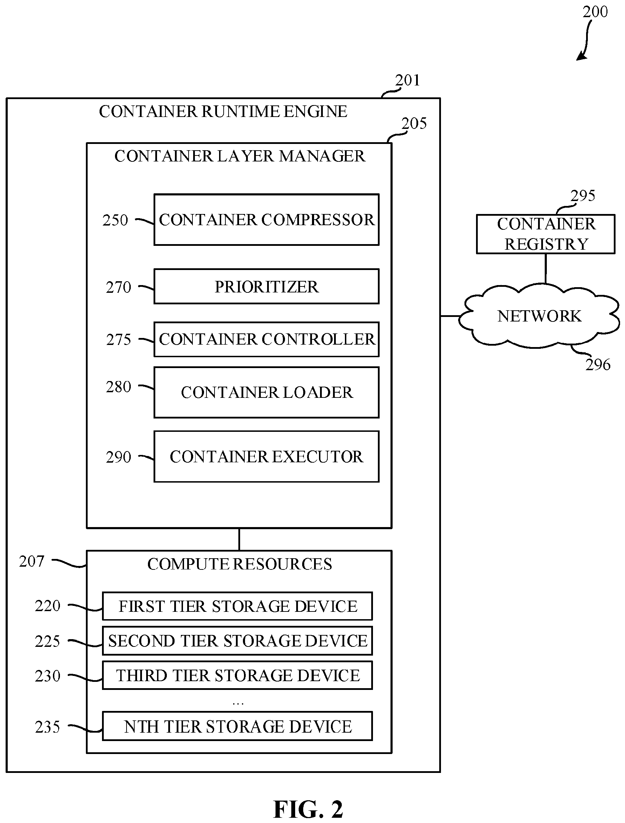

FIG. 2 is a block diagram of an example Container Runtime Engine 201 implemented in accordance with teachings of this disclosure to enable lazy loading of container images. The example Container Runtime Engine 201 the illustrated example of FIG. 2 includes a container layer manager 205 and compute resources 207. The example compute resources 207 include a first-tier storage device 220, a second-tier storage device 225, a third tier storage device 230, and an nth tier storage device 235. The example container layer manager 205 of the illustrated example of FIG. 2 includes a container compressor 250, a prioritizer 270, a container controller 275, a container loader 280, and a container executor 290. The example container runtime engine 201 communicates with a container registry 295 via a network 296.

The example first tier storage device 220, the example second-tier storage device 225, the example third tier storage device 230, and the example Nth tier storage device 235 of the illustrated example of FIG. 2 are implemented by storage devices having varying performance characteristics. For example, the first tier memory device 220 of the illustrated example of FIG. 2 has the highest performance characteristics (e.g., highest read/write rates, highest bandwidth, etc.), whereas the Nth tier memory device 235 of the illustrated example of FIG. 2 has the lowest performance characteristics (e.g., lowest read/write rates, lowest bandwidth, etc.). Various trade-offs exist for using higher performance memory devices. For example, low latency storage devices, such as DRAM disk, may be very expensive to implement and/or unreliable in large quantities. In contrast, lower performing memory devices may be more readily implemented in larger quantities and/or more reliable.

In the illustrated example of FIG. 2, the first tier storage device 220 is implemented using Dynamic Random Access Memory (DRAM) disk (e.g., a slice of DRAM memory that is allocated and mounted on the machine as a storage device). The example second tier memory device 225 of the illustrated example of FIG. 2 is implemented using a persistent memory, such as, for example, an Intel^{®} Optane^{™} DC Persistent Memory (DCPMM). In some examples, the persistent memory is operated in an "App Direct" mode. In this manner, the second tier storage device 225 has performance characteristics that are slightly less than the first tier memory device 230. The example third tier storage device 230 is implemented using a solid state drive (SSD) such as, for example, an Intel^{®} Optane^{™} DC solid state drive (SSD). The example nth tier storage device 235 is implemented using a legacy solid-state drive(s) and/or traditional hard disk drive(s) (HDD) steer memory device 235. While four tiers of storage devices are shown in the illustrated example of FIG. 2, any number of tiers of storage devices may additionally or alternatively be used. Moreover, different memory technologies may be used to implement each of the tiers of storage devices. For example, the first tier storage device 220 may be implemented by the persistent memory (e.g., the Intel^{®} Optane^{™} DC Persistent Memory (DCPMM)).

The example container compressor 250 of the illustrated example of FIG. 2 builds an image of the container using the compression format that includes a landmark. In examples disclosed herein, the use of the landmark in the compression format enables the compressed image layers to be pulled into different memory tiers for storage. In examples disclosed herein, the estargz compression format is used. However, any other compression format that uses a landmark and/or otherwise enables segmentation of layers for loading into operational memory may additionally or alternatively be used. In this manner, the second set of layers (e.g., layers appearing after the landmark) can be de-prioritized and/or placed into a slower storage tier at a later time. Thus, before the container is ready to enter the run phase, the different layers from the different mediums are mounted and the container's own thin layer is created (e.g., in the fastest available storage device). After this layer is mounted in the container too, the execution can start. In some examples, the example container compressor 250 is implemented by means for compressing.

The example prioritizer 270 of the illustrated example of FIG. 2 determines the priority level to which the container is to be prioritized. In examples disclosed herein, the priority of the container is determined based on an indication included in the request to store the container received by the container controller 275. Such indication may be provided by, for example, a user that submitted the request. However, the priority of the container may be determined based on any other criteria including, for example, a history of the execution of the container, a type of operation performed by the container, etc. In some examples, the priority may correspond to a desired latency for execution of the container, a desired Quality of Service (QoS), etc. In some examples, the prioritizer is enhanced to use the Intel^{®} Resource Director Technology (Intel^{®} RDT). In some examples, the prioritizer 270 is implemented by means for prioritizing.

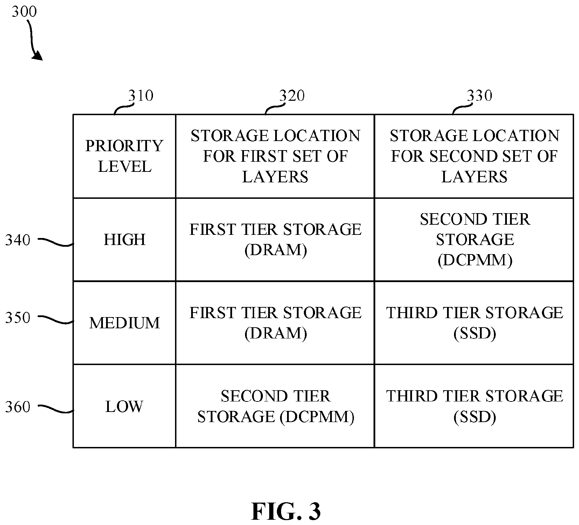

The example container controller 275 of the illustrated example of FIG. 2 selects storage locations based on a priority level to which the container is to be prioritized. Using the priority level identified by the prioritizer 270, the example container controller 275 consults the priority mapping table (e.g., the mapping table 300 disclosed below in connection with FIG. 3). The container controller 275 communicates with container registry 295 to pull the layers to their appropriate storage device(s). In some examples, the example container controller 275 is implemented by means for controlling.

The example container loader 280 of the illustrated example of FIG. 2, in response to a request to load a container, consults the container registry 278 to identify the location of the first set of layers in the first memory, and executes one or more operations to pull the layers of the container into the appropriate storage device(s). In some examples, the container loader 280 omits performance of a load operation if, for example, the data is already stored on disk (e.g., the layers of an image already exist in storage). In such an example, a move command and/or a copy command may be executed by the container loader 280 to move and/or copy the layers of the image to an appropriate storage medium for execution. In some examples, the container loader 280 is implemented by means for loading.

The example container executor 290 of the illustrated example of FIG. 2 triggers execution of the container once the layers up to landmark have been pulled into the appropriate storage and the thin read-write layer has been created. For example, after mounting of the first set of layers and creating and mounting the thin R/W layer, the example container executor 290 may trigger execution of the container using the first set of layers, while the container loader 280 continues to load the second set of layers into the rest of storage mediums. In some examples, the container executor 290 is implemented by means for executing.

The example container registry 295 of the illustrated example of FIG. 2 stores container images for long term so that local storage devices do not get overloaded. In some examples, the container registry 295 is referred to as a container repository. The example container registry 295 is implemented by exposing a REST-like endpoint for storage devices (e.g., flash memory, magnetic media, optical media, solid state disks, hard drive(s), etc.). Furthermore, the data stored in the example container registry 278 contains the read-only container images described above in connection with FIGS. 1A and 1B, stored layer by layer. The container registry usually stores the layers in targz format, which will be backward compatible to the estargz format and its landmark. In the illustrated example of FIG. 2, the example container registry 278 also stores indications about which storage /memory medium the layers of the containers should be pulled into. In some examples, the container registry 278 additionally stores the priority level to memory tier mapping table disclosed below in connection with FIG. 3.

The example network 296 of the illustrated example of FIG. 2 is implemented by the Internet. However, the example network 296 may be implemented by any other network that facilitates communication of data between the example container runtime engine 201 and the container registry 295. In some examples, the network 296 is implemented as a local area network (LAN), but may additionally or alternatively be implemented as a wide area network (WAN), a virtual private network (VPN), etc. In some examples, the network 296 may represent multiple networks.

FIG. 3 is a priority level to memory tier mapping table 300 that may be used to identify locations for storage of layers of a container. The example mapping table 300 of the illustrated example of FIG. 3 includes a priority level column 310, a storage location for the first set of layers column 320, and a storage location for the second set of layers column 330. The example mapping table 300 includes a first row 340 that identifies where the first and second layers of a high priority container are to be stored (e.g., in the first tier storage and the second tier storage, respectively). The example mapping table 300 includes a second row 350 that identifies where the first and second layers of a medium priority container are to be stored (e.g., in the first tier storage and the third tier storage, respectively). The example mapping table 300 includes a third row 360 that identifies where the first and second layers of a low priority container are to be stored (e.g., in the second tier storage and the third tier storage, respectively).

While in the illustrated example of FIG. 3, three levels of priority are shown, any number of levels of priority may be used. For example, a two level priority system (e.g., high priority and low priority) may be used, a three level priority system (e.g., high priority, medium priority, and low priority) may be used, etc. As an alternative example to the mapping table 300 of FIG. 3, in a two priority level implementation, a first layer of a first container having the first priority (e.g., a high priority) may be stored in the first tier memory device 220 and a second layer of the first container may be stored in the second tier memory device 225. In the same alternative example, a first layer of a second container having a second priority (e.g., a low priority) may be stored in the second tier memory device 225 and the second layer of the second container may be stored in the third tier memory device 230. Defining additional priority levels enables different combinations of tiers of memory devices for storage of the layers of the container to be used.

Moreover, while in the illustrated example of FIG. 3, two storage locations are defined for each level of priority, in some examples, additional storage locations may be defined for each level of priority. For example, a third set of layers may have a respective storage location defined. In such an example, multiple landmarks may be detected within the compressed image to enable identification of the first, second, and third sets of layers.

While an example manner of implementing the container layer manager 205 of FIG. 2 is illustrated in FIG. 2, one or more of the elements, processes and/or devices illustrated in FIG. 2 may be combined, divided, rearranged, omitted, eliminated and/or implemented in any other way. Further, the example container compressor 250, the example prioritizer 270, the example container controller 275, the example container loader 280, the example container executor 290, and/or, more generally, the example container layer manager 205 of FIG. 2 may be implemented by hardware, software, firmware and/or any combination of hardware, software and/or firmware. Thus, for example, any of the example container compressor 250, the example prioritizer 270, the example container controller 275, the example container loader 280, the example container executor 290, and/or, more generally, the example container layer manager 205 of FIG. 2 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example container compressor 250, the example prioritizer 270, the example container controller 275, the example container loader 280, the example container executor 290, and/or, more generally, the example container layer manager 205 of FIG. 2 is/are hereby expressly defined to include a non-transitory computer readable storage device or storage disk such as a memory, a digital versatile disk (DVD), a compact disk (CD), a Blu-ray disk, etc. including the software and/or firmware. Further still, the example container layer manager 205 of FIG. 2 may include one or more elements, processes and/or devices in addition to, or instead of, those illustrated in FIG. 2, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

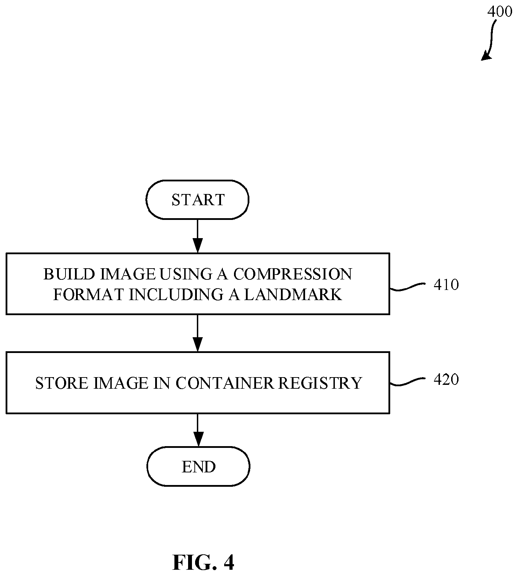

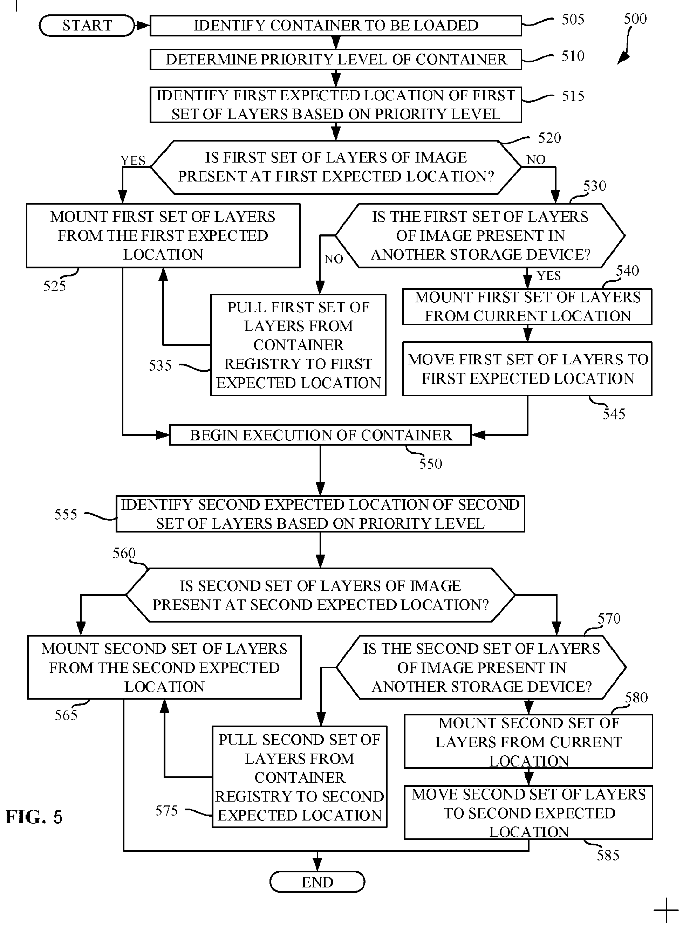

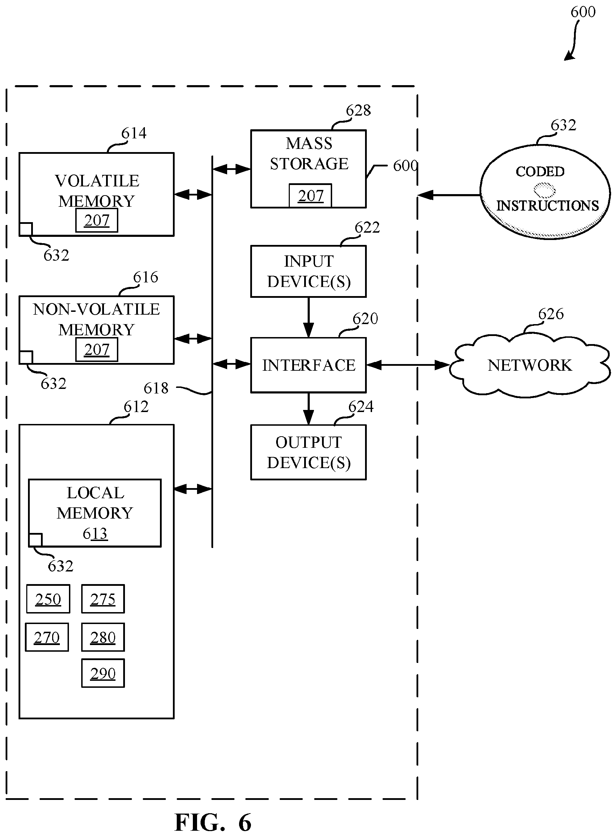

Flowcharts representative of example hardware logic, machine readable instructions, hardware implemented state machines, and/or any combination thereof for implementing the container layer manager 205 of FIG. 2 are shown in FIGS. 4 and/or 5. The machine readable instructions may be one or more executable programs or portion(s) of an executable program for execution by a computer processor and/or processor circuitry, such as the processor 612 shown in the example processor platform 600 discussed below in connection with FIG. 6. The program may be embodied in software stored on a non-transitory computer readable storage medium such as a CD-ROM, a floppy disk, a hard drive, a DVD, a Blu-ray disk, or a memory associated with the processor 612, but the entire program and/or parts thereof could alternatively be executed by a device other than the processor 612 and/or embodied in firmware or dedicated hardware. Further, although the example program is described with reference to the flowcharts illustrated in FIGS. 4 and/or 5, many other methods of implementing the example container layer manager 205 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, Go, etc.

As mentioned above, the example processes of FIGS. 4 and/or 5 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a," "an," "first," "second," etc.) do not exclude a plurality. The term "a" or "an" entity, as used herein, refers to one or more of that entity. The terms "a" (or "an"), "one or more," and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 4 is a flowchart representative of example machine readable instructions that may be executed to implement the example computing system of FIG. 2 to compress and store an image . The example process 400 the illustrated example of FIG. 4 begins when the example container compressor 250 builds an image of the container using a compression format that includes a landmark. (Block 410). In examples disclosed herein, the use of the landmark in the compression format enables layers of the compressed image to be segmented into different memory tiers for storage. As a result of the segmentation, the different segments can be requested and/or be pulled into respective tiers of storage devices (e.g., the first tier storage device 220, the second tier storage device 225, the third tier storage device 230, the nth tier storage device 235, etc.) based on their priority. In examples disclosed herein, the estargz compression format is used. However, any other compression format that uses a landmark and/or otherwise enables segmentation of layers for loading into operational memory may additionally or alternatively be used. The example container compressor 250 transmits the image for storage to the container registry 295. (Block 420). The example process 400 of FIG. 4 terminates, but may be repeated upon, for example, a subsequent request to build an image for storage in the container registry 295.

FIG. 5 is a flowchart representative of example machine readable instructions that may be executed to implement the example computing system of FIG. 2 to load a container for execution. The example process 500 of the illustrated example of FIG. 5 begins when the example container controller 275 identifies a container that is to be loaded for execution. (Block 505). The container may be identified based on, for example, a request to execute a container received from a user or from any other entity.

The example prioritizer 270 determines a priority level to which the container is to be prioritized. (Block 510). In examples disclosed herein, the priority of the container is determined based on an indication included in the request to execute the container. Such indication may be provided by, for example, a user that submitted the request for execution of the container. However, the priority of the container may be determined based on any other criteria including, for example, a history of the execution of the container, a type of operation performed by the container, etc. In some examples, the priority may correspond to a desired latency for execution of the container, a desired Quality of Service (QoS), etc.

The example container controller 275 identifies a first expected location of a first set of layers of the container image, based on the priority level identified by the prioritizer 270. (Block 515). In some examples, the container controller 275 consults the priority mapping table (e.g., the mapping table 300 of FIG. 3, which may be stored in the container registry 295 or alternatively, in a local memory and/or storage device of the container runtime engine 201) to identify the first expected location of the first set of layers. In examples disclosed herein, any number of levels of priority may be used. For example, a two level priority system (e.g., high priority and low priority) may be used, a three level priority system (e.g., high priority, medium priority, and low priority) may be used, etc. As an example, in a two priority level implementation, a first layer of a first container having the first priority (e.g., a high priority) may be stored in the first tier memory device 220 and a second layer of the first container may be stored in the second tier memory device 225. In the same example, a first layer of a second container having a second priority (e.g., a low priority) may be stored in the second tier memory device 225 and the second layer of the second container may be stored in the third tier memory device 230. Defining additional priority levels enables different combinations of tiers of memory devices for storage of the layers of the container to be used.

The example container loader 280 determines whether the first set of layers is present at the first expected location. (Block 520). If the example container loader 280 determines that the first set of layers is present at the first expected location (e.g., Block 520 returns a result of YES), the example container loader 280 mounts the first set of layers from the first expected location. (Block 525). In this manner, the first set of layers can begin execution from a selected tier of storage device, while the remaining layers are loaded (or retrieved).

If the example container loader 280 determines that the first set of layers is not present at the first expected location (e.g., Block 520 returns a result of NO), the example container loader 280 determines if the first set of layers of the image is present on another storage device of the container runtime engine 201. (Block 530). If the first set of layers of the image is not present on another storage device of the container runtime engine 201, (e.g., Block 530 returns a result of NO), the example container controller 275 pulls the first set of layers from the container registry to the first expected location. (Block 535). The example container loader 280 then mounts the first set of layers from the first expected location. (Block 525).

In some examples, a first set of layers for a container might not already be present at the first expected location (e.g., block 520 returns a result of NO), but may be present in a different storage device of the container runtime engine 201 (e.g., block 530 returns a result of YES). Such a situation may, in some examples, be the result of a change in a priority level of a container. Such a change may be made to increase the priority level of the container (e.g., resulting in the layers being loaded from a faster storage device), or alternatively may be made to decrease the priority level of the container (e.g., resulting in the layers being loaded from a slower storage device).

If the example container loader 280 determines that the first set of layers of the image, while not present in the first expected location, are present in another location of the container runtime engine 201 (e.g., Block 530 returns a result of YES), the example container loader 280 mounts the first set of layers from the current location. (Block 540). In such an example, using the first set of layers from the current location will not only result in improved loading performance as compared to pulling the first set of layers from the container registry 295, but also conserves network bandwidth that would have otherwise been consumed by pulling the first set of layers from the container registry 295.

After mounting the first set of layers from their current location (Block 540), the example container loader 280 moves and/or copies the first set of layers to the first expected location. (Block 545). Such a moving/copying operation is performed in the background, and ensures that upon subsequent requests for execution of the container, that the first set of layers will be present in the first expected location. In some examples, after movement/copying of the first set of layers to the first expected location, the first set of layers are re-mounted from the first expected location. In some alternative examples, the first set of layers are first moved to the first expected location and mounted from there (e.g., instead of mounting from the current location while the first set of layers are moved/copied to the first expected location).

Upon mounting of the first set of layers (e.g., from the first expected location at block 525 or from the current location at block 540), the example container executor 290 begins execution of the container. (Block 550). In some examples, the causing of the execution of the container by the container executor 290 includes initializing a thin read/write layer. In this manner, because the first set of layers are mounted, and may be done so from a first storage device that is implemented using a memory technology that offers improved performance as compared to a second storage device (e.g., where a second set of layers of the image may be stored), important components of the container can be more quickly mounted for execution, while components of the container of lesser importance can be mounted and/or otherwise made available for execution in a delayed fashion. Such an approach reduces the cold start time of the execution of the container.

The example container controller 275 identifies a second expected location of a second set of layers of the container image, based on the priority level identified by the prioritizer 270 at Block 515. (Block 555). In some examples, the identification of the second expected location of the second set of layers may be performed at a same time as the identification of the first expected location of the first set of layers. In other words, having identified the priority level of the container, the example controller 275 may determine each of the locations in which layers of the container image are expected to be stored.

The example container loader 280 determines whether the second set of layers is present at the second expected location. (Block 560). If the example container loader 280 determines that the second set of layers is present at the second expected location (e.g., Block 560 returns a result of YES), the example container loader 280 mounts the second set of layers from the first expected location. (Block 565). In this manner, the second set of layers can be accessed as part of execution of the container. While in the illustrated example of FIG. 5, the second set of layers are mounted from the second expected location. In some examples, the second expected location may correspond to a storage device that, while efficient for storage of the second set of layers, is not efficient for execution of the second set of layers. Thus, in some examples, instead of directly mounting the second set of layers from the second expected location, the example container loader 280 may copy the second set of layers to another location for mounting. In other words, if the second expected location corresponded to the third tier storage device 230, the second set of layers may be copied to the second tier storage device 225 (or the first tier storage device 220) for mounting and execution. After execution of the container, the second set of layers may be deleted from the location that they had temporarily been copied to for execution.

If the example container loader 280 determines that the second set of layers is not present at the second expected location (e.g., Block 560 returns a result of NO), the example container loader 280 determines if the second set of layers of the image is present on another storage device of the container runtime engine 201. (Block 570). If the second set of layers of the image is not present on another storage device of the container runtime engine 201, (e.g., Block 570 returns a result of NO), the example container controller 275 pulls the second set of layers from the container registry to the second expected location. (Block 575). The example container loader 280 then mounts the second set of layers from the second expected location. (Block 565).

In some examples, a second set of layers for a container might not already be present at the second expected location (e.g., block 560 returns a result of NO), but may be present in a different storage device of the container runtime engine 201 (e.g., block 570 returns a result of YES). Such a situation may, in some examples, be the result of a change in a priority level of a container. Such a change may be made to increase the priority level of the container (e.g., resulting in the layers being loaded from a faster storage device), or alternatively may be made to decrease the priority level of the container (e.g., resulting in the layers being loaded from a slower storage device).

If the example container loader 280 determines that the second set of layers of the image, while not present in the second expected location, are present in another location of the container runtime engine 201 (e.g., Block 530 returns a result of YES), the example container loader 280 mounts the second set of layers from the current location. (Block 580). In such an example, using the second set of layers from the current location will not only result in improved loading performance as compared to pulling the second set of layers from the repository, but also conserves network bandwidth that would have otherwise been consumed by pulling the second set of layers from the container registry 295.

After mounting the second set of layers from their current location (Block 580), the example container loader 280 moves and/or copies the second set of layers to the second expected location. (Block 585). Such a moving/copying operation is performed in the background, and ensures that upon subsequent requests for execution of the container, that the second set of layers will be present in the second expected location. In some examples, after movement/copying of the second set of layers to the second expected location, the second set of layers are re-mounted from the second expected location. In some alternative examples, the second set of layers are second moved to the second expected location and mounted from there (e.g., instead of mounting from the current location while the second set of layers are moved/copied to the second expected location).

Upon mounting of the second set of layers (e.g., from the second expected location at block 525 or from the current location at block 540), the example container executor 290 continues execution of the container, using the layers in the second set of layers which were mounted in a delayed fashion, as necessary. As noted above, such an approach reduces the cold start time of the execution of the container. The example process 500 of FIG. 5 then terminates (e.g., while the execution of the container continues). The example process 500 of FIG. 5 may be repeated upon, for example, a subsequent request for execution of a container.

If, for example, a subsequent (e.g., a second) request for execution of the container were received, and the initial request were to request execution of a container and had changed the priority level of the container (e.g., causing movement of the first set of layers and/or the second set of layers to new expected locations, respectively, as described in blocks 540, 545, 580, 585), the execution of the container in the context of the second request would result in mounting of the layers from the expected locations (e.g., blocks 525, 565). As a result, the time to begin execution responsive to the second request is improved as compared to the time to begin execution responsive to the first request, as movement of the first and/or second sets of layers to their new expected locations is no longer necessary. Thus, while a change in the priority of the container that is indicated via a request to execute the container might not affect the loading and/or execution of the container in response to the request, subsequent executions of the container may benefit from the adjusted priority level.

While in the illustrated example of FIG. 5, the adjusting of the locations at which layers of a container image are stored is performed in the context of a request to execute a container, such adjustment need not be performed solely in response to such a request and may, in some examples, be performed after an indication that a priority level for a container is to be changed. In other words, the locations at which the first set of layers and/or the second set of layers may be changed independent of a request to execute a container associated with the layers.

FIG. 6 is a block diagram of an example processor platform 200 structured to execute the instructions of FIGS. 4 and/or 5 to implement the container layer manager 205 of FIG. 2. The processor platform 600 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 600 of the illustrated example includes a processor 612. The processor 612 of the illustrated example is hardware. For example, the processor 612 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example container compressor 250, the example prioritizer 270, the example container controller 275, the example container loader 280, and the example container executor 290.

The processor 612 of the illustrated example includes a local memory 613 (e.g., a cache). The processor 612 of the illustrated example is in communication with a main memory including a volatile memory 614 and a non-volatile memory 616 via a bus 618. The volatile memory 614 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 616 may be implemented by flash memory and/or any other desired type of memory device. Access to the main memory 614, 616 is controlled by a memory controller.

The processor platform 600 of the illustrated example also includes an interface circuit 620. The interface circuit 620 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 622 are connected to the interface circuit 620. The input device(s) 622 permit(s) a user to enter data and/or commands into the processor 612. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 624 are also connected to the interface circuit 620 of the illustrated example. The output devices 624 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 620 of the illustrated example, thus, typically includes a graphics driver card, a graphics driver chip and/or a graphics driver processor.

The interface circuit 620 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 626. The communication can be via, for example, an Ethernet connection, a digital subscriber line (DSL) connection, a telephone line connection, a coaxial cable system, a satellite system, a line-of-site wireless system, a cellular telephone system, etc.

The processor platform 600 of the illustrated example also includes one or more mass storage devices 628 for storing software and/or data. Examples of such mass storage devices 628 include floppy disk drives, hard drive disks, compact disk drives, Blu-ray disk drives, redundant array of independent disks (RAID) systems, and digital versatile disk (DVD) drives.

The machine executable instructions 632 of FIGS. 4 and/or 5 may be stored in the mass storage device 628, in the volatile memory 614, in the non-volatile memory 616, and/or on a removable non-transitory computer readable storage medium such as a CD or DVD.

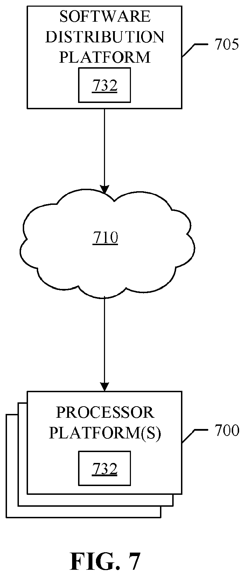

A block diagram illustrating an example software distribution platform 705 to distribute software such as the example computer readable instructions 632 of FIG. 6 to third parties is illustrated in FIG. 7. The example software distribution platform 705 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 632 of FIG. 6. The third parties may be consumers, users, retailers, OEMs, etc., who purchase and/or license the software for use and/or re-sale and/or sub-licensing. In the illustrated example, the software distribution platform 705 includes one or more servers and one or more storage devices. The storage devices store the computer readable instructions 632, which may correspond to the example computer readable instructions 400 and/or 500 of FIGS. 4 and/or 5, as described above. The one or more servers of the example software distribution platform 705 are in communication with a network 710, which may correspond to any one or more of the Internet and/or any of the example networks 626 described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 632 from the software distribution platform 705. For example, the software, which may correspond to the example computer readable instructions 632 of FIG. 6, may be downloaded to the example processor platform 600, which is to execute the computer readable instructions 632 to implement the container layer manager 205. In some example, one or more servers of the software distribution platform 705 periodically offer, transmit, and/or force updates to the software (e.g., the example computer readable instructions 632 of FIG. 6) to ensure improvements, patches, updates, etc. are distributed and applied to the software at the end user devices.

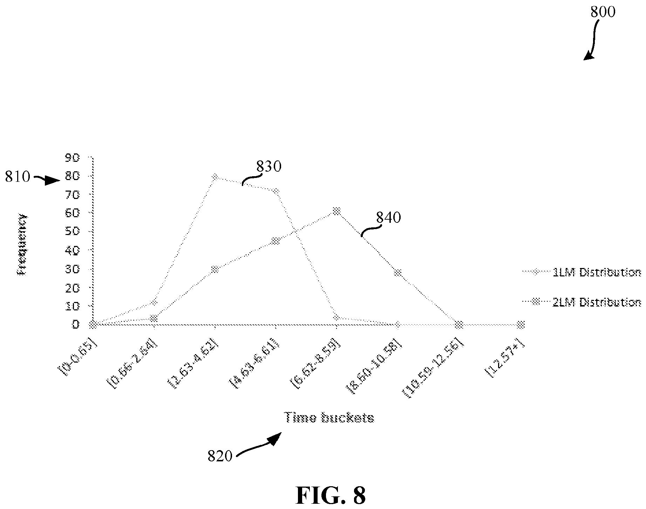

FIG. 8 is a diagram illustrating example performance improvements as a result of using example approaches disclosed herein. FIG. 8 represents a histogram 800 for execution of one hundred and sixty eight concurrent functions (e.g., containers). The example histogram 800 includes a vertical axis 810 representing frequency, a horizontal axis 820 representing time buckets, and two data sets 830, 840. The first data set 830 represents functions (e.g., containers) that were executed more frequently and therefore resulted in a higher priority level. The second data set 840 represents functions (e.g., containers) that were executed less frequently (e.g., than the functions represented by the first data set) and therefore resulted in a lower priority level. In general, the functions having the higher priority level exhibited faster execution.

From the foregoing, it will be appreciated that example methods, apparatus and articles of manufacture have been disclosed that enable efficient loading of a container into operational memory for execution. Example approaches disclosed herein enable portions of an image of a container to be stored in separate memories having different performance characteristics and, as a result, enable loading of sections of a container image that are needed for immediate execution of a container in a prioritized manner. Such prioritization enables improved loading and/or execution times for such containers. The disclosed methods, apparatus and articles of manufacture improve the efficiency of using a computing device by enabling images to be loaded into operational memory for execution in a more efficient manner. The disclosed methods, apparatus and articles of manufacture are accordingly directed to one or more improvement(s) in the functioning of a computer.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this invention. The invention is defined by the appended independent claims. The dependent claims define preferred embodiments.

## Claims

1. A method for managing a container image, the method comprising by executing instructions with a processor (600):
determining a priority level at which a container is to be executed;
determining a first expected location for a first set of layers (131, 134) of the container;
determining a second expected location for a second set of layers (132, 133) of the container, the first expected location and the second expected location determined based on the determined priority level;
mounting the first set of layers (131, 134) from the first expected location;
initiating execution of the container based on the first set of layers (131, 134); and
mounting the second set of layers (132, 133) from the second expected location after the initiation of the execution of the container based on the first set of layers (131, 134).

2. The method of claim 1, further including building the image of the container using a compression format that includes a landmark (150), wherein the first set of layers (131, 134) is arranged prior to the landmark (150) and the second set of layers (132, 133) is arranged after the landmark (150).

3. The method of claim 2, further including de-prioritizing the second set of layers (132, 133) arranged after the landmark (150) to the second expected location.

4. The method of any one of claims 1-3, further including:
pulling the first set of layers (131, 134) from a container registry to the first expected location responsive to a first determination that the first set of layers (131, 134) are not present in the first expected location; and
pulling the second set of layers (132, 133) from the container registry to the second expected location responsive to a second determination that the second set of layers (132, 133) are not present in the second expected location.

5. The method of any one of claims 1-4, further including continuing execution of the container based on the second set of layers (132, 133) after its mounting..

6. The method of any one of claims 1-5, wherein the first expected location identifies a first storage device.

7. The method of claim 6, wherein the first storage device is implemented using dynamic random access memory.

8. The method of claim 6 or 7, wherein the second expected location identifies a second storage device different from the first storage device.

9. The method of claim 8, wherein the second storage device is implemented by a persistent memory.

10. Machine-readable storage including machine-readable instructions, when executed by a computer to implement a method as claimed in any preceding claim.

11. An apparatus for managing a container image, the apparatus comprising:
a prioritizer (270) to determine a priority level at which a container is to be executed;
a container controller (275) to determine a first expected location for a first set of layers (131, 134) of the container, the container controller to determine a second expected location for a second set of layers (132, 133) of the container, the first expected location and the second expected location determined based on the determined priority level, the second set of layers (132, 133) separated from the first set of layers (131, 134) in an image by a landmark (150);
a container loader (280) to mount the first set of layers (131, 134) from the first expected location; and
a container executor (290) to initiate execution of the container based on the mounted first set of layers (131, 134),
wherein the container executor (290) is to trigger execution of the container based on the first set of layers (131, 134) prior to the container loader (280) having mounted the second set of layers (132, 133).

12. The apparatus of claim 11, further including a container compressor (250) to build the image of the container using a compression format that includes the landmark.

13. The apparatus of claim 11 or 12, wherein the container controller (275) is to pull the first set of layers (131, 134) from a container registry to the first expected location, the container controller to pull the second set of layers (132, 133) from the container registry to the second expected location.

14. The apparatus of one of the claims 11-13, wherein the first expected location identifies a first storage device.

## Patentansprüche

1. Verfahren zum Verwalten eines Containerbildes, wobei das Verfahren durch ein Ausführen von Anweisungen mit einem Prozessor (600) umfasst:
Ermitteln einer Prioritätsebene, auf der ein Container ausgeführt werden soll;
Ermitteln eines ersten erwarteten Standorts für eine erste Gruppe von Schichten (131, 134) des Containers;
Ermitteln eines zweiten erwarteten Standorts für eine zweite Gruppe von Schichten (132, 133) des Containers, wobei der erste erwartete Standort und der zweite erwartete Standort aufgrund der ermittelten Prioritätsebene ermittelt werden;
Montieren der ersten Gruppe von Schichten (131, 134) ausgehend von dem ersten erwarteten Standort;
Initiieren einer Ausführung des Containers basierend auf der ersten Gruppe von Schichten (131, 134); und
Montieren der zweiten Gruppe von Schichten (132, 133) ausgehend von dem zweiten erwarteten Standort nach dem Initiieren der Ausführung des Containers basierend auf der ersten Gruppe von Schichten (131, 134).

2. Verfahren nach Anspruch 1, das außerdem ein Aufbauen des Bildes des Containers unter Verwendung eines Komprimierungsformats beinhaltet, das einen Orientierungspunkt (150) beinhaltet, wobei die erste Gruppe von Schichten (131, 134) vor dem Orientierungspunkt (150) angeordnet wird und wobei die zweite Gruppe von Schichten (132, 133) nach dem Orientierungspunkt (150) angeordnet wird.

3. Verfahren nach Anspruch 2, das außerdem ein Depriorisieren der zweiten Gruppe von Schichten (132, 133), die nach dem Orientierungspunkt (150) angeordnet wurde, auf den zweiten erwarteten Standort beinhaltet.

4. Verfahren nach einem der Ansprüche 1 bis 3, das außerdem beinhaltet:
Ziehen der ersten Gruppe von Schichten (131, 134) aus einem Containerregister zu dem ersten erwarteten Standort als Reaktion auf ein erstes Ermitteln, dass die erste Gruppe von Schichten (131, 134) nicht an dem ersten erwarteten Standort vorhanden ist; und
Ziehen der zweiten Gruppe von Schichten (132, 133) aus dem Containerregister zu dem zweiten erwarteten Standort als Reaktion auf ein zweites Ermitteln, dass die zweite Gruppe von Schichten (132, 133) nicht an dem zweiten erwarteten Standort vorhanden ist.

5. Verfahren nach einem der Ansprüche 1 bis 4, das außerdem eine Fortsetzen der Ausführung des Containers basierend auf der zweiten Gruppe von Schichten (132, 133) nach ihrem Montieren beinhaltet.

6. Verfahren nach einem der Ansprüche 1 bis 5, wobei der erste erwartete Standort eine erste Speichervorrichtung identifiziert.

7. Verfahren nach Anspruch 6, wobei die erste Speichervorrichtung unter Verwendung eines dynamischen Direktzugriffsspeichers implementiert wird.

8. Verfahren nach Anspruch 6 oder 7, wobei der zweite erwartete Standort eine zweite Speichervorrichtung identifiziert, die verschieden von der ersten Speichervorrichtung ist.

9. Verfahren nach Anspruch 8, wobei die zweite Speichervorrichtung durch einen nicht-flüchtigen Arbeitsspeicher implementiert wird.

10. Maschinenlesbarer Speicher, der maschinenlesbare Anweisungen beinhaltet, die, wenn sie von einem Computer ausgeführt werden, ein Verfahren nach einem der vorhergehenden Ansprüche implementieren.

11. Einrichtung zum Verwalten eines Containerbildes, wobei die Einrichtung umfasst:
eine Priorisierungseinheit (270) zum Ermitteln einer Prioritätsebene, auf der ein Container ausgeführt werden soll;
eine Containersteuereinheit (275) zum Ermitteln eines ersten erwarteten Standorts für eine erste Gruppe von Schichten (131, 134) des Containers, wobei die Containersteuereinheit geeignet ist zum Ermitteln eines zweiten erwarteten Standorts für eine zweite Gruppe von Schichten (132, 133) des Containers, wobei der erste erwartete Standort und der zweite erwartete Standort aufgrund der ermittelten Prioritätsebene ermittelt werden, wobei die zweite Gruppe von Schichten (132, 133) in einem Bild durch einen Orientierungspunkt (150) von der ersten Gruppe von Schichten (131, 134) getrennt ist;
einen Containerlader (280) zum Montieren der ersten Gruppe von Schichten (131, 134) ausgehend von dem ersten erwarteten Standort; und
eine Containerausführungseinheit (290) zum Initiieren einer Ausführung des Containers basierend auf der montierten ersten Gruppe von Schichten (131, 134),
wobei die Containerausführungseinheit (290) geeignet ist zum Triggern einer Ausführung des Containers basierend auf der ersten Gruppe von Schichten (131, 134) bevor der Containerlader (280) die zweite Gruppe von Schichten (132, 133) montiert hat.

12. Einrichtung nach Anspruch 11, die außerdem eine Containerkomprimierungseinheit (250) beinhaltet zum Aufbauen des Bildes des Containers unter Verwendung eines Komprimierungsformats, das den Orientierungspunkt beinhaltet.

13. Einrichtung nach Anspruch 11 oder 12, wobei die Containersteuereinheit (275) geeignet ist zum Ziehen der ersten Gruppe von Schichten (131, 134) von einem Containerregister zu dem ersten erwarteten Standort, wobei die Containersteuereinheit geeignet ist zum Ziehen der zweiten Gruppe von Schichten (132, 133) von dem Containerregister zu dem zweiten erwarteten Standort.

14. Einrichtung nach einem der Ansprüche 11 bis 13, wobei der erste erwartete Standort eine erste Speichervorrichtung identifiziert.

## Revendications

1. Procédé pour gérer une image de conteneur, le procédé comprenant, au moyen de l'exécution d'instructions à l'aide d'un processeur (600) :
la détermination d'un niveau de priorité selon lequel un conteneur doit être exécuté ;
la détermination d'une première localisation attendue pour un premier ensemble de couches (131, 134) du conteneur ;
la détermination d'une seconde localisation attendue pour un second ensemble de couches (132, 133) du conteneur, la première localisation attendue et la seconde localisation attendue étant déterminées sur la base du niveau de priorité déterminé ;
le fait de faire monter le premier ensemble de couches (131, 134) depuis la première localisation attendue ;
l'initiation de l'exécution du conteneur sur la base du premier ensemble de couches (131, 134) ; et
le fait de faire monter le second ensemble de couches (132, 133) depuis la seconde localisation attendue après l'initiation de l'exécution du conteneur sur la base du premier ensemble de couches (131, 134).

2. Procédé selon la revendication 1, incluant en outre l'élaboration de l'image de conteneur en utilisant un format de compression qui inclut un repère (150), dans lequel le premier ensemble de couches (131, 134) est agencé avant le repère (150) et le second ensemble de couches (132, 133) est agencé après le repère (150).

3. Procédé selon la revendication 2, incluant en outre la dé-priorisation du second ensemble de couches (132, 133) qui est agencé après le repère (150) à la seconde localisation attendue.

4. Procédé selon l'une quelconque des revendications 1 à 3, incluant en outre :
le déplacement du premier ensemble de couches (131, 134) depuis un registre de conteneurs jusqu'à la première localisation attendue en réponse à une première détermination consistant en ce que le premier ensemble de couches (131, 134) n'est pas présent à la première localisation attendue ; et
le déplacement du second ensemble de couches (132, 133) depuis le registre de conteneurs jusqu'à la seconde localisation attendue en réponse à une seconde détermination consistant en ce que le second ensemble de couches (132, 133) n'est pas présent à la seconde localisation attendue.

5. Procédé selon l'une quelconque des revendications 1 à 4, incluant en outre la poursuite de l'exécution du conteneur sur la base du second ensemble de couches (132, 133) après qu'il a été monté.

6. Procédé selon l'une quelconque des revendications 1 à 5, dans lequel la première localisation attendue identifie un premier dispositif de stockage.

7. Procédé selon la revendication 6, dans lequel le premier dispositif de stockage est mis en œuvre en utilisant une mémoire vive dynamique.

8. Procédé selon la revendication 6 ou 7, dans lequel la seconde localisation attendue identifie un second dispositif de stockage différent du premier dispositif de stockage.

9. Procédé selon la revendication 8, dans lequel le second dispositif de stockage est mis en œuvre au moyen d'une mémoire persistante.

10. Stockage lisible par machine incluant des instructions lisibles par machine qui, lorsqu'elles sont exécutées par un ordinateur, mettent en œuvre un procédé tel que revendiqué selon l'une quelconque des revendications précédentes.

11. Appareil pour gérer une image de conteneur, l'appareil comprenant :
un moyen de priorisation (270) pour déterminer un niveau de priorité selon lequel un conteneur doit être exécuté ;
un contrôleur de conteneur (275) pour déterminer une première localisation attendue pour un premier ensemble de couches (131, 134) du conteneur, le contrôleur de conteneur déterminant une seconde localisation attendue pour un second ensemble de couches (132, 133) du conteneur, la première localisation attendue et la seconde localisation attendue étant déterminées sur la base du niveau de priorité déterminé, le second ensemble de couches (132, 133) étant séparé du premier ensemble de couches (131, 134) dans une image par un repère (150) ;
un chargeur de conteneur (280) pour faire monter le premier ensemble de couches (131, 134) depuis la première localisation attendue ; et
un exécuteur de conteneur (290) pour initier l'exécution du conteneur sur la base du premier ensemble de couches (131, 134) après qu'il a été monté,
dans lequel l'exécuteur de conteneur (290) a pour objet de déclencher l'exécution du conteneur sur la base du premier ensemble de couches (131, 134) avant que le chargeur de conteneur (280) n'ait fait monter le second ensemble de couches (132, 133).

12. Appareil selon la revendication 11, incluant en outre un compresseur de conteneur (250) pour élaborer l'image du conteneur en utilisant un format de compression qui inclut le repère.

13. Appareil selon la revendication 11 ou 12, dans lequel le contrôleur de conteneur (275) a pour objet de déplacer le premier ensemble de couches (131, 134) depuis un registre de conteneurs jusqu'à la première localisation attendue, le contrôleur de conteneur a pour objet de déplacer le second ensemble de couches (132, 133) depuis le registre de conteneurs jusqu'à la seconde localisation attendue.

14. Appareil selon l'une quelconque des revendications 11 à 13, dans lequel la première localisation attendue identifie un premier dispositif de stockage.
